# FASCICULE DE BREVET EUROPEEN

(11) **EP 2 835 804 B1**
(45) Date de publication et mention de la délivrance du brevet: **28.06.2017**
(21) Numéro de dépôt: 14179628.4
(22) Date de dépôt: 04.08.2014
(51) Int. Cl.: G21C 17/06, G01T 1/00

(54) **Méthode d'analyse des changements de géometrie d'un combustible irradié**
Analysemethode der Geometrieveränderungen eines abgebrannten Brennstoffs
Method for analysing changes in the geometry of an irradiated fuel

(30) Priorité: 07.08.2013 FR 1357868
(43) Date de publication de la demande: 11.02.2015
(73) Titulaire: COMMISSARIAT À L'ÉNERGIE ATOMIQUE ET AUX ÉNERGIES ALTERNATIVES, 75015 Paris (FR)
(72) Inventeur: Loubet, Laurent, 84530 VILLELAURE (FR); Lacroix, Brigitte, 84240 LA TOUR D'AIGUES (FR); Noirot, Jean, 13100 AIX EN PROVENCE (FR); Martella, Thierry, 13650 MEYRARGUES (FR)
(74) Mandataire: Esselin, Sophie

(56) Documents cités:
- JP-A- 2012 185 108
- ABBAS K ET AL: "In situ gamma spectroscopy of spent nuclear fuel using a CdTe detector", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 383, no. 2, 11 décembre 1996 (1996-12-11), pages 601-604, XP004016226, ISSN: 0168-9002, DOI: 10.1016/S0168-9002(96)00843-1
- MATSSON I ET AL: "Developments in Gamma Scanning of Irradiated Nuclear Fuel", APPLIED RADIATION AND ISOTOPES, ELSEVIER, OXFORD, GB, vol. 48, no. 10-12, 12 octobre 1997 (1997-10-12), pages 1289-1298, XP004101713, ISSN: 0969-8043, DOI: 10.1016/S0969-8043(97)00121-8
- LAMONTAGNE J ET AL: "Swelling under irradiation of MgO pellets containing americium oxide: The ECRIX-H irradiation experiment", JOURNAL OF NUCLEAR MATERIALS, ELSEVIER BV, NL, vol. 413, no. 3, 12 avril 2011 (2011-04-12), pages 137-144, XP028222134, ISSN: 0022-3115, DOI: 10.1016/J.JNUCMAT.2011.04.013 [extrait le 2011-04-22]

## Description

L'invention concerne une méthode d'analyse des changements de géométrie d'un combustible irradié et s'applique au domaine de l'analyse du combustible radioactif, plus particulièrement à son analyse par la spectrométrie Gamma.

Le combustible utilisé dans les centrales nucléaires évolue au cours du temps suite à son utilisation. Il est habituel d'analyser cette évolution et pour cela, des éléments de combustibles sont extraits puis examinés dans des laboratoires équipés d'enceintes adaptées pour diminuer l'exposition au rayonnement par exemple à l'aide d'épais mûrs en plomb. Ces enceintes sont appelées cellules de haute activité ou cellules chaudes (« hot cells » en anglais).

Le combustible analysé se présente habituellement sous forme d'un crayon combustible irradié. Des outils et des méthodes ont été développés au fil des années pour les étudier.

Les examens réalisés en cellule de haute activité peuvent être destructifs, une intervention physique sur le crayon étant alors nécessaire. A titre d'exemple, le crayon peut alors être découpé en tronçons pour ce type d'examen.

Alternativement, des examens dits non destructifs désignés par l'acronyme END peuvent également être mis en oeuvre. Dans ce cas, la géométrie du crayon n'est pas modifiée. Les examens non destructifs peuvent être réalisés en mesurant le rayonnement émis par les isotopes résultant de la fission d'un combustible tel que l'uranium deux cent trente-cinq noté 235U dans la suite de la description. A titre d'exemple, la spectrométrie gamma, dont le principe est d'identifier des éléments radioactifs par la mesure de l'énergie des rayonnements (photons) gamma émis, permet d'accéder sans endommagement à des informations directement liées au combustible contenu dans le crayon.

On peut notamment citer l'article de K.Abbas, G.Nicolaou, L. Koch : « In situ gamma spectoscopy of spent nuclear fuel using a CgTe detector », NUCLEAR INSTRUMENTS & METHODS IN PHYSICS RESEARCH. SECTION A : ACCELERATORS, SPECTROMETERS, DETECTORS, AND ASSOCIATED EQUIPMENT, ELSEVIER BV NORTH-HOLLAND, NL vol.383, n°2, 11 décembre 1996, pages 601-604, XP004016226, ou l'article de MATSSON ET Al. « Developments in Gamma Scanning of Irradiated Nuclear Fuel" APPLIED RADIATION AND ISOTOPES, ELSEVIER, OXFORD, GB, vol.48, n°.10-12, 12 octobre 1997, pages 1289-1298 XP0041011713.

Connaissant les raies gammas des isotopes à étudier, il est possible de faire des mesures par région d'intérêt afin d'obtenir une surface par pas de mesure et par isotope. La répartition des produits de fissions créés par l'irradiation et visible en spectrométrie gamma donne directement accès aux caractéristiques de la colonne combustible comme le début de colonne et la fin de colonne et fournit des informations sur l'irradiation. Dans cette description, l'expression « colonne combustible » désigne un ensemble d'au moins deux pastilles alignées et placées les unes derrière les autres. Un crayon est un ensemble composé d'une colonne de combustible, d'une gaine comprenant ladite colonne et de deux bouchons situés de part et d'autre de la gaine.

Les crayons pour réacteur à eau pressurisée appelés crayon REP sont composés d'une gaine cylindrique contenant une pluralité de pastilles de combustible, positionnées les unes à la suite des autres de manière longitudinale à l'intérieur de ladite gaine. Les pastilles ont une forme cylindrique et sont d'une longueur de l'ordre du centimètre. Elles présentent à leurs extrémités des chanfreins et des cavités (désignées habituellement par le mot anglais « dishing »), un des objectifs étant de permettre l'encaissement les déformations.

La géométrie particulière des pastilles induit des diminutions de matière à leurs extrémités. La conséquence est que les taux de comptage gamma des produits de fission sont plus faibles au voisinage de ces zones. Cette variation du taux de comptage permet ainsi de distinguer les pastilles les unes des autres.

Des analyseurs multicanaux sont habituellement utilisés pour analyser le spectre gamma. Ces analyseurs présentent comme données de sortie des histogrammes composés de plusieurs canaux. Un canal d'histogramme *j* correspond par exemple à un intervalle d'énergie *Bⱼ.* Les quantités à mesurer des photons gamma sont classées par canaux en fonction de leur niveau d'énergie. L'ensemble des canaux *j* représentatifs d'un spectre composent un histogramme.

La quantité mesurée pour un canal *j* correspond à un nombre d'événements mesurés en un temps donné, appelés aussi coups. Pour chaque canal, les coups mesurés sont comptabilisés, ce qui permet de déterminer la valeur associée auxdits canaux. Les coups correspondent à des mesures représentatives des interactions entre les particules à mesurer et le capteur utilisé, par exemple le cristal de germanium. En d'autres termes, lorsqu'une particule est détectée par le capteur, un coup est comptabilisé. L'histogramme est habituellement représenté en indiquant le niveau d'énergie en abscisse et le nombre de coups en ordonnées (dans ce cas on obtient un « comptage ») ou en nombre de coups par seconde (on obtient un taux de comptage).

Les examens non destructifs END de crayons de combustible irradiés par spectrométrie gamma permettent notamment de localiser les zones de séparation entre deux pastilles adjacentes, ces zones étant appelées dans la suite de la description zones inter-pastilles.

Un besoin existe de connaître l'évolution de la géométrie des colonnes de combustible et des pastilles les composant au cours de leur cycle dans le réacteur notamment afin d'améliorer la compréhension des phénomènes se produisant en réacteur. Cette connaissance a notamment pour objectif l'amélioration des procédés de fabrication de ces combustibles, pastilles et crayons, le meilleur pilotage du réacteur, voire de la gestion accidentelle.

Un des buts de l'invention est de remédier à ces insuffisances de l'état de la technique et d'y apporter des améliorations.

A cet effet l'invention a pour objet une méthode d'analyse d'au moins un crayon comprenant une colonne de combustible nucléaire, un crayon comportant des zones pleines emplies entièrement de combustible et des zones intermédiaires partiellement emplies de combustible, la méthode comprenant les étapes suivantes:
- acquisition d'un profil de comptage associé à un isotope non migrant, un profil étant composé de mesures de spectrométrie effectuées le long du crayon pour cet isotope ;
- localisation desdites zones intermédiaires ;
- détermination d'un ensemble d'au moins un indicateur K_i permettant de quantifier la diminution de matière au niveau d'une zone intermédiaire d'indice i, ledit indicateur étant déduit du profil de comptage ;
- détection du changement de géométrie en comparant l'ensemble d'au moins un indicateur K_i à un ensemble d'au moins une valeur de référence RK représentative de la géométrie initiale de la colonne de combustible nucléaire.

Dans un mode de réalisation, la méthode d'analyse comprend une étape d'estimation de la localisation des zones intermédiaires par analyse du profil de comptage.

Le changement de géométrie est par exemple détecté à l'étape de détection pour au moins une zone intermédiaire et déduit par analyse statistique des indicateurs de K_i, un changement de géométrie étant signalé lorsqu'au moins une valeur K_i est incompatible avec une dispersion de mesure théorique attendue sans changement de géométrie.

Le changement de géométrie est par exemple détecté pour au moins une zone intermédiaire en comparant K_i avec une valeur de référence RK prédéfinie, un changement de géométrie étant détecté lorsque le rapport entre K_i et RK dépasse un seuil de comparaison k1 préalablement choisi, ou se trouve en-dessous d'un autre seuil de comparaison k2 préalablement choisi.

La valeur de référence RK est par exemple déterminée statistiquement par la moyenne de valeurs de K_i observées expérimentalement sur une pluralité de crayon de même type.

Alternativement, la valeur de référence RK est par exemple déterminée par le calcul théorique d'une géométrie donnée de pastille.

Le crayon correspond par exemple à un crayon ou un tronçon de crayons de type REP composé d'une pluralité de pastilles, une zone intermédiaire correspondant à une zone inter-pastilles.

Un isotope non migrant de type Ru136 peut être utilisé pour déterminer le profil de comptage.

L'invention a aussi pour objet un système d'analyse d'au moins un crayon de combustible nucléaire comprenant un dispositif de spectrométrie gamma et une unité de traitement mettant en oeuvre le procédé décrit précédemment.

L'invention a aussi pour objet un programme d'ordinateur comportant des instructions pour l'exécution de la méthode décrit précédemment, lorsque le programme est exécuté par un processeur.

D'autres caractéristiques et avantages de l'invention apparaîtront à l'aide de la description qui suit donnée à titre illustratif et non limitatif, faite en regard des dessins annexés parmi lesquels :
- la figure 1 donne un exemple de méthode permettant de localiser les zones inter-pastilles dans un crayon ;
- la figure 2 représente une courbe de comptage du 137Cs mesurée par spectrométrie gamma sur une colonne de combustibles composée d'une pluralité de pastilles ;
- la figure 3 illustre de manière simplifiée une méthode d'analyse des changements de géométrie d'un combustible irradié.

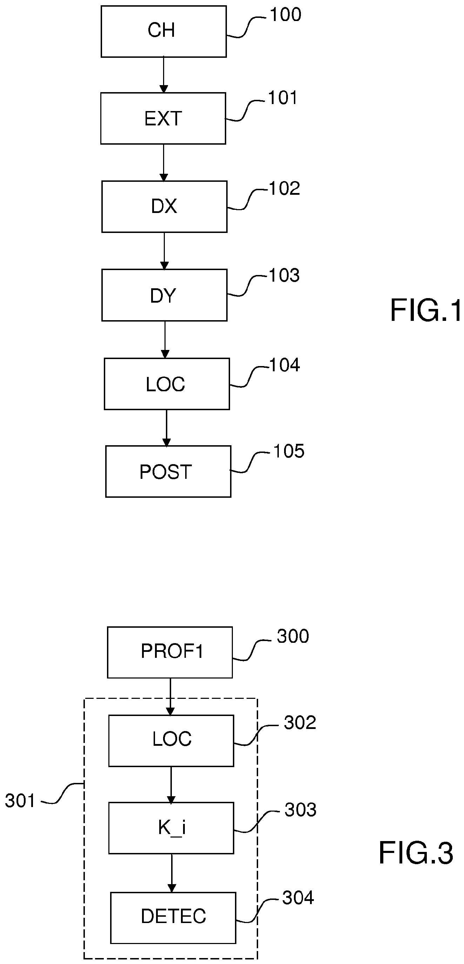

La figure 1 donne un exemple simplifié de méthode permettant de localiser les zones inter-pastilles dans un crayon ou dans un tronçon de crayon REP.

Les mesures acquises par spectrométrie gamma permettent d'obtenir un spectre complet à chaque pas de mesure. Le crayon étudié peut être déplacé transversalement au dispositif de mesure utilisé, de manière à ce que ledit dispositif puisse mesurer toute la colonne combustible. L'inverse est également possible. C'est alors le dispositif qui se déplace. Ce dispositif met en oeuvre une fenêtre de mesures d'une taille habituellement de l'ordre du millimètre au travers de laquelle le rayonnement gamma des photons est mesuré. Pour chaque point de mesure, les surfaces nettes par région d'intérêt sont calculées par exemple pour une quinzaine d'isotopes, ainsi que le comptage total toutes énergies. Cela permet de tracer les répartitions de taux de comptage par isotope. Il est également possible de tracer la répartition du comptage total le long d'une colonne de combustible. Ces répartitions sont appelées « profils de comptage » dans la suite de la description.

Une succession d'étapes peut alors être mise en oeuvre pour localiser les zones inter-pastilles. Cela permet notamment de dénombrer et d'étudier l'évolution de la forme des pastilles au cours de la combustion (i.e. au cours de son cycle en réacteur).

Une première étape 100 sélectionne un profil de comptage associée à un isotope donné. Ce profil doit être exploitable, c'est-à-dire qu'il doit correspondre à une répartition présentant de bonnes caractéristiques en termes statistique.

Une deuxième étape 101 a pour fonction d'éliminer la zone d'extrémité de la colonne à traiter.

Une troisième étape 102 correspond à la sélection d'une plage axiale DX alignée avec la colonne combustible et exprimée en millimètres. Sur cette plage axiale, une moyenne glissante des taux de comptage est calculée. A titre d'exemple, DX = 5 mm.

Une quatrième étape 103 correspond à la sélection d'un seuil de détection DY. Ce seuil permet de discriminer les zones de pastilles. Si le comptage en un point x diffère de plus de DY pourcents de la moyenne glissante calculée pour ce point, le point est considéré comme appartenant à une zone inter-pastille. A titre d'exemple, DY = 5%.

Une cinquième étape 104 acquière la localisation des pastilles trouvées, c'est-à-dire la cote de début et la cote de fin pour chacune d'elle.

Une sixième étape 105 peut être mise en oeuvre de manière optionnelle afin de faire se rejoindre manuellement deux zones qui auraient été considérées comme n'appartenant pas à la même pastille alors que les longueurs des fragments situés de part et d'autre d'une zone inter-pastilles sont significativement inférieures ou supérieures à la longueur attendue (et inversement).

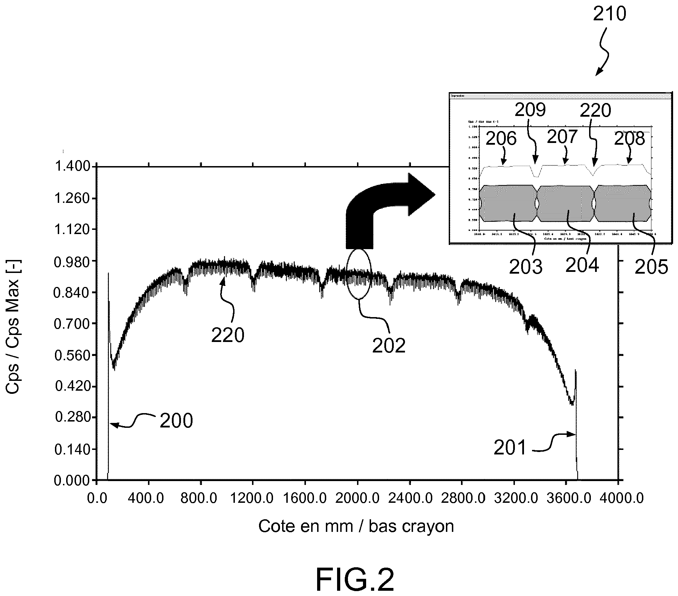

La figure 2 représente une courbe de comptage du 137Cs mesurée par spectrométrie gamma sur une colonne de combustibles composée d'une pluralité de pastilles REP. En abscisse est indiquée la cote en millimètres c'est-à-dire la localisation des différents points de mesure. Le nombre de coups normés (Coups sur Coups Max) mesurés est indiqué en ordonnées.

Comme mentionné précédemment, l'observation du rayonnement d'un produit de fission par spectrométrie gamma permet d'accéder directement aux caractéristiques de la colonne de combustible. Dans cet exemple, le rayonnement du 137Cs a été observé, cette observation permettant de localiser le début de colonne 200 et la fin de colonne 201. En outre, dans cet exemple la géométrie particulière des pastilles comprises dans les crayons REP induit des diminutions de matière à leurs extrémités. Ainsi, le taux de comptage gamma des produits de fission est plus faible au niveau des zones inter-pastilles ce qui permet de distinguer la position des pastilles les unes par rapport aux autres. Une zone 202 de la courbe mesurée a été agrandie 210. Cette zone correspond à une longueur de trois pastilles 203, 204, 205. La courbe du taux de comptage mesuré fait apparaître trois plateaux 206, 207, 208 correspondants aux parties pleines des pastilles. Par ailleurs, deux creux 209, 220 apparaissent et correspondent aux zones inter- pastilles. Il est ainsi possible par analyse de la courbe obtenue d'étudier la géométrie de la colonne de combustible ainsi que le cas échéant la géométrie des pastilles qui les composent. Il est alors possible de recompter les pastilles, de vérifier la fabrication des crayons et de suivre l'allongement de la colonne suite à leur irradiation. La méthode présentée avec la figure 1 peut être utilisée pour cela.

La figure 3 illustre de manière simplifiée une méthode d'analyse des changements de géométrie d'un combustible irradié.

Une première étape 300 réalise à un premier instant des mesures de spectre gamma le long d'un crayon de combustible ou d'une colonne combustible comprenant plusieurs pastilles avec un pas de mesure choisi au préalable. Le résultat de ces mesures correspond à un ensemble de spectres gamma, un spectre étant obtenu à chaque pas de mesure. De ces spectres gamma est extrait un premier profil de mesure appelé aussi profil de comptage. Ce profil de comptage est déterminé pour un isotope non migrant.

Un isotope non migrant est un isotope restant à l'endroit où il a été produit lors de la fission, quelque soit la température à laquelle le combustible a été exposé. Le ruthénium cent six (106Ru) peut être utilisé comme isotope non migrant mais d'autres isotopes non migrants peuvent également être utilisés pour cela, comme le 95Zr, 154Eu ou le 103Rh.

Un ensemble d'étapes 301 est ensuite mis en oeuvre afin de déterminer si un changement de géométrie de la colonne de combustible a eu lieu.

Une étape 302 est mise en oeuvre de manière à localiser les zones intermédiaires et ainsi les différencier des zones pleines. Une zone d'un crayon est dite pleine lorsqu'elle est entièrement remplie de matière et une zone intermédiaire est une zone d'un crayon qui n'est pas entièrement remplie de matière. Une zone intermédiaire correspond donc à une zone inter-pastilles ou bien à une zone correspondant à l'extrémité d'une colonne de combustible.

Dans la suite de la description, il est question de zones inter-pastilles mais l'invention peut être appliquée sur d'autres zones intermédiaires

A titre d'exemple, une zone intermédiaire entre deux pastilles d'un crayon REP comprend de l'ordre de dix pourcents de moins de matière par rapport à une zone pleine correspondant à une valeur de RK de 0,90. Une telle zone est aussi appelée zone inter-pastilles. Dans la suite de la description, il est question de zones inter-pastilles mais l'invention peut être appliquée sur d'autres zones intermédiaires telles que celle que l'on trouve à chaque extrémité du crayon.

Pour localiser précisément les zones intermédiaires, un profil de comptage de l'isotope non migrant déterminé pour le crayon à un temps de mesure de référence peut être utilisé. L'analyse des mesures de rayonnement de l'isotope non migrant permet d'obtenir une valeur de référence représentative du différentiel d'émission de rayons gamma entre une zone pleine et une zone intermédiaire. Dans un mode de réalisation, la méthode décrite précédemment à l'aide de la figure 1 peut être utilisée pour effectuer cette analyse.

Alternativement, les zones intermédiaires peuvent être localisées en utilisant un plan donnant la géométrie d'une colonne avant combustion.

Une étape 303 a pour objectif de déterminer un indicateur K_i permettant de quantifier la diminution de matière au niveau des zones intermédiaires localisées à l'étape précédente 302. Cet indicateur correspond à une comparaison entre une valeur interpolée T_i pour cette zone et la valeur du profil de mesure de l'isotope de non migrant au niveau de la zone intermédiaire.

La valeur interpolée T_i correspond à une valeur qui aurait pu être mesurée sur la zone intermédiaire si celle-ci était remplie de matière. Pour les étapes suivantes, Il est possible d'utiliser l'ensemble des valeurs de K_i déterminées pour chaque zone inter-pastilles d'indice i ou un sous-ensemble d'au moins une de ces valeurs.

Ensuite, une étape 304 a pour fonction de détecter un changement de géométrie dans le crayon. Une valeur de référence RK peut être déterminée pour cela.

La valeur de référence RK peut être déterminée statistiquement par la moyenne des valeurs de K_i observées expérimentalement sur une pluralité de crayon de même type.

Alternativement, la valeur de référence RK peut être déterminée par le calcul théorique d'une géométrie donnée de pastille, recalée avec la configuration et le type d'appareil de mesure utilisé pour réaliser la spectrométrie gamma.

La valeur de RK est par exemple de 0,9.

Dans tous les cas, un écart entre K_i et cette valeur RK déterminée est alors le signe du changement de géométrie.

Dans un exemple de réalisation, des constantes k1 et k2 où k1 < k2 peuvent être utilisées de manière à détecter le changement de géométrie, et ce de la manière suivante.

Si k1 x RK ≤ K-i ≤ k2 x RK, avec par exemple k1 = 0,95 et k2 = 1,05, il n'y a pas de changement de géométrie significatif.

Si K_i < k1 x RK ou si K_i > k2 un changement de géométrie est détecté.

Dans cet exemple, il est ainsi vérifié que la valeur de K_i est comprise entre 85% et 90% de la valeur de référence RK.

Si ce n'est pas le cas, un changement de géométrie est détecté au niveau de la zone inter-pastilles d'indice i.

Toujours dans cet exemple, si K_i est supérieur à 105% de la valeur de référence RK, il y a changement de géométrie par comblement, voire gonflement. Si en revanche K_i est inférieur à 95% de la valeur de référence RK, il a changement de géométrie par creusement excessif la zone d'inter-pastille considérée.

Plus généralement, la comparaison de K_i avec RK permet donc de détecter un changement de géométrie correspondant à un gonflement, un comblement ou à un creusement excessif.

L'homme du métier peut choisir d'utiliser d'autres indicateurs permettant de comparer les valeurs de K_i à une valeur de référence.

Cette comparaison permet également le cas échéant de détecter et de quantifier les déformations du combustible du fait par exemple du gonflement d'une pastille ou du comblement d'une zone inter-pastilles, voire de son creusement excessif.

## Revendications

1. Méthode d'analyse d'au moins un crayon comprenant une colonne de combustible nucléaire, un crayon comportant des zones pleines emplies entièrement de combustible et des zones intermédiaires partiellement emplies de combustible, ladite méthode d'analyse étant implémentée par ordinateur et comprenant les étapes suivantes:
- acquisition (300) d'un profil de comptage associé à un isotope non migrant, un profil étant composé de mesures de spectrométrie effectuées le long du crayon pour cet isotope ;
- localisation desdites zones intermédiaires ;
la méthode étant **caractérisée en ce qu'**elle comprend aussi les étapes de
- détermination (303) d'un ensemble d'au moins un indicateur K_i permettant de quantifier la diminution de matière au niveau d'une zone intermédiaire d'indice i, ledit indicateur étant déduit du profil de comptage; et de
- détection (304) du changement de géométrie en comparant l'ensemble d'au moins un indicateur K_i à un ensemble d'au moins une valeur de référence RK représentative de la géométrie initiale de la colonne de combustible nucléaire.

2. Méthode d'analyse selon la revendication 1 comprenant une étape d'estimation de la localisation (302) des zones intermédiaires par analyse du profil de comptage.

3. Méthode d'analyse selon l'une des revendications précédentes dans laquelle le changement de géométrie est détecté à l'étape (304) pour au moins une zone intermédiaire et déduit par analyse statistique des indicateurs de K_i, un changement de géométrie étant signalé lorsque au moins une valeur K_i est incompatible avec une dispersion de mesure théorique attendue sans changement de géométrie.

4. Méthode d'analyse selon l'une des revendications 1 ou 2 dans laquelle le changement de géométrie est détecté à l'étape (304) pour au moins une zone intermédiaire en comparant K_i avec une valeur de référence RK prédéfinie, un changement de géométrie étant détecté lorsque le rapport entre K_i et RK dépasse un seuil de comparaison k1 préalablement choisi, ou se trouve en-dessous d'un autre seuil de comparaison k2 préalablement choisi.

5. Méthode selon la revendication 4 dans laquelle la valeur de référence RK est déterminée statistiquement par la moyenne de valeurs de K_i observées expérimentalement sur une pluralité de crayon de même type.

6. Méthode selon la revendication 4 dans laquelle la valeur de référence RK déterminée par le calcul théorique d'une géométrie donnée de pastille.

7. Méthode selon l'une des revendications précédentes dans laquelle le crayon est un crayon ou un tronçon de crayons de type REP composé d'une pluralité de pastilles, une zone intermédiaire correspondant à une zone inter-pastilles.

8. Méthode selon l'une des revendications précédentes dans lequel un isotope non migrant de type Ru106 est utilisé pour déterminer le profil de comptage.

9. Système d'analyse d'au moins un crayon de combustible nucléaire comprenant un dispositif de spectrométrie gamma et une unité de traitement mettant en oeuvre le procédé selon l'une quelconque des revendications précédentes.

10. Programme d'ordinateur comportant des instructions pour l'exécution de la méthode selon l'une quelconque des revendications 1 à 8, lorsque le programme est exécuté par un processeur.

## Patentansprüche

1. Verfahren zum Analysieren von wenigstens einem Stab, der eine Kernbrennstoffsäule umfasst, wobei ein Stab völlig mit Brennstoff gefüllte Vollzonen und teilweise mit Brennstoff gefüllte Zwischenzonen umfasst, wobei das Analyseverfahren mit einem Computer durchgeführt wird und die folgenden Schritte beinhaltet:
- Erfassen (300) eines mit einem nicht migrierenden Isotop assoziierten Zählprofils, wobei ein Profil aus entlang dem Stab für dieses Isotop durchgeführten Spektrometriemessungen zusammengesetzt ist;
- Orten der Zwischenzonen;
wobei das Verfahren **dadurch gekennzeichnet ist, dass** es auch die folgenden Schritte beinhaltet:
- Bestimmen (303) eines Satzes von wenigstens einem Indikator K_i, der die Quantifizierung der Materialabnahme an einer Zwischenzone mit Index i zulässt, wobei der Indikator vom Zählprofil abgeleitet wird; und
- Erkennen (304) der Geometrieveränderung durch Vergleichen des Satzes von wenigstens einem Indikator K_i mit einem Satz von wenigstens einem Referenzwert RK, der die Anfangsgeometrie der Kernbrennstoffsäule repräsentiert.

2. Analyseverfahren nach Anspruch 1, das einen Schritt des Schätzens der Orte (302) der Zwischenzonen durch Analysieren des Zählprofils beinhaltet.

3. Analyseverfahren nach einem der vorherigen Ansprüche, bei dem die Geometrieveränderung in Schritt (304) für wenigstens eine Zwischenzone erkannt und durch statistische Analyse der Indikatoren von K_i abgeleitet wird, wobei eine Geometrieveränderung signalisiert wird, wenn wenigstens ein Wert K_i mit einer erwarteten theoretischen Messwertstreuung ohne Geometrieveränderung inkompatibel ist.

4. Analyseverfahren nach Anspruch 1 oder 2, bei dem die Geometrieveränderung in Schritt (304) für wenigstens eine Zwischenzone durch Vergleichen von K_i mit einem vordefinierten Referenzwert RK erkannt wird, wobei eine Geometrieveränderung erkannt wird, wenn das Verhältnis zwischen K_i und RK eine zuvor gewählte Vergleichsschwelle k1 übersteigt oder unterhalb einer anderen zuvor gewählten Vergleichsschwelle k2 liegt.

5. Verfahren nach Anspruch 4, bei dem der Referenzwert RK statistisch durch das Mittel von experimentell beobachteten Werten von K_i an einer Mehrzahl von Stäben desselben Typs bestimmt wird.

6. Verfahren nach Anspruch 4, wobei der Referenzwert RK durch theoretisches Berechnen einer gegebenen Pelletgeometrie bestimmt wird.

7. Verfahren nach einem der vorherigen Ansprüche, bei dem der Stab ein Stab oder Stababschnitt des REP-Typs ist, bestehend aus mehreren Pellets, wobei eine Zwischenzone einer Pelletzwischenzone entspricht.

8. Verfahren nach einem der vorherigen Ansprüche, bei dem ein nicht migrierendes Isotop des Typs Ru106 zum Bestimmen des Zählprofils benutzt wird.

9. System zum Analysieren von wenigstens einem Kernbrennstab, umfassend eine Gamma-Spektrometrievorrichtung und eine Verarbeitungseinheit zum Ausführen des Verfahrens nach einem der vorherigen Ansprüche.

10. Computerprogramm, das Befehle zum Ausführen des Verfahrens nach einem der Ansprüche 1 bis 8 umfasst, wenn das Programm von einem Prozessor ausgeführt wird.

## Claims

1. Analysis method for at least one rod comprising a nuclear fuel column, a rod comprising solid zones which are filled entirely with fuel and intermediate zones which are partially filled with fuel, the analysis method being implemented via computer and comprising the following steps:
- acquiring (300) a count profile associated with a non-migrating isotope, a profile being composed of spectrometry measurements which are carried out along the rod for this isotope;
- locating the intermediate zones;
the method being **characterised in that** it also comprises the steps of:
- determining (303) a set of at least one indicator K_i which enables the reduction of material at an intermediate zone having the index i to be quantified, the indicator being deduced from the count profile; and
- detecting (304) the change in geometry by comparing the set of at least one indicator K_i with a set of at least one reference value RK which is representative of the initial geometry of the column of nuclear fuel.

2. Analysis method according to claim 1, comprising a step of estimating the location (302) of the intermediate zones by means of analysis of the count profile.

3. Analysis method according to either of the preceding claims, wherein the change in geometry is detected at step (304) for at least one intermediate zone and deduced by means of statistical analysis of the indicators of K_i, a change in geometry being signalled when at least one value K_i is incompatible with an anticipated theoretical measurement dispersion without any change in geometry.

4. Analysis method according to either claim 1 or claim 2, wherein the change in geometry is detected at step (304) for at least one intermediate zone by comparing K_i with a predefined reference value RK, a change in geometry being detected when the ratio between K_i and RK exceeds a comparison threshold k1 which has been selected beforehand, or is below another comparison threshold k2 which has been selected beforehand.

5. Method according to claim 4, wherein the reference value RK is determined statistically by the mean of values of K_i observed experimentally over a plurality of rods of the same type.

6. Method according to claim 4, wherein the reference value RK is determined by the theoretical calculation of a specific geometry of pellet.

7. Method according to any one of the preceding claims, wherein the rod is a rod or a portion of rods of the REP type which is composed of a plurality of pellets, an intermediate zone corresponding to an inter-pellet zone.

8. Method according to any one of the preceding claims, wherein a non-migrating isotope of the type Ru106 is used to determine the count profile.

9. Analysis system for at least one nuclear fuel rod comprising a gamma-ray spectrometry device and a processing unit which implements the method according to any one of the preceding claims.

10. Computer programme comprising instructions for carrying out the method according to any one of claims 1 to 8 when the programme is carried out by a processor.
